# EUROPÄISCHE PATENTSCHRIFT

(11) **EP 0 240 073 B1**
(45) Veröffentlichungstag und Bekanntmachung des Hinweises auf die Patenterteilung: **10.02.1993**
(21) Anmeldenummer: 87200545.9
(22) Anmeldetag: 25.03.1987
(51) Int. Cl.: H04Q 7/04

(54) **Verfahren und Steuereinrichtung zum Auswählen eines Organisationskanals durch eine bewegliche Funkstation**
Method and control circuit for the selection of a service channel in a mobile radio station
Procédé et dispositif de commande pour la sélection d'un canal de service par une station radio mobile

(30) Priorität: 04.04.1986 DE 3611301
(43) Veröffentlichungstag der Anmeldung: 07.10.1987
(73) Patentinhaber: Philips Patentverwaltung GmbH, 22335 Hamburg (DE); Philips Electronics N.V., 5621 BA Eindhoven (NL)
(72) Erfinder: Eizenhöfer, Alfons, Dr.-Ing., D-8503 Altdorf (DE); Schmidt, Werner, Dr.-Ing., Roscommon (IE)
(74) Vertreter: Peuckert, Hermann, Dipl.-Ing.

(56) Entgegenhaltungen:
- EP-A- 0 036 146
- EP-A- 0 111 972
- DE-A- 3 200 965
- IEEE INTERNATIONAL CONFERENCE ON COMMUNICATIONS, Band 3, 14.-17. Mai 1984, Seiten 1188-1191, Rai Congres Centre, Amsterdam, NL; M. KURAMOTO et al.: "Design concept of new-high capacity land mobile communication system"
- INTERNATIONAL SWITCHING SYMPOSIUM, 15.-20. März 1987, Seiten 739-746, Phoenix, US; A. EIZENHÖFER et al.: "Integration of services in the digital mobile telephone system MATS-D"

## Beschreibung

Die Erfindung betrifft ein Verfahren zum Auswählen eines Organisationskanals durch eine bewegliche Funkstation gemäß dem Oberbegriff des Patentanspruchs 1.

Bekannte Funkübertragungssysteme weisen ortsfeste Funkstationen auf, welche in räumlicher Anordnung ein Zellularsystem mit sich überlappenden Funkzonen bilden. Der Radius solcher Funkzonen liegt in Abhängigkeit von der Höhe der Antennenmasten von ortsfesten Funkstationen und der Sendeleistung zwischen 2 und 30 Kilometer. Jede Funkzone wird von einer ortsfesten Funkstation versorgt. Diese kann Gespräche über sogenannte Funkvermittlungseinrichtungen vom und zum öffentlichen Fernsprechnetz weiter vermitteln. Mehrere benachbarte Funkzonen können zu einem sogenannten Rufbereich zusammengefaßt werden. Auf der Festseite werden laufend die Aufenthaltsorte aller beweglicher Funkstationen erfaßt und in einem sogenannten Adreßbuch gespeichert. Wechselt eine bewegliche Funkstation den Rufbereich, so erfolgt eine Änderung im Adreßbuch.

Den ortsfesten Funkstationen jeder Funkzone des Funkübertragungssystems sind je nach Verkehrsaufkommen eine Anzahl von Sprechkanälen und jeweils mindestens ein Organisationskanal zugeordnet. In räumlich benachbarten Funkzonen können für verschiedene Organisationskanäle auch unterschiedliche Frequenzen, Spreizcodes oder Zeitkanäle verwendet werden. Zur Unterscheidung von Organisationskanal und Sprechkanal werden diese durch eine spezielle Meldung gekennzeichnet. Bei Ausfall bzw. Störung eines Organisationskanals kann jeder Sprechkanal durch Wechsel des Codes die Aufgabe des Organisationskanals übernehmen.

Die Suche der beweglichen Funkstation nach einem Organisationskanal kann lange dauern, wenn das Funkübertragungssystem eine Vielzahl von Übertragungskanälen (Organisationskanälen und Sprechkanälen) aufweist.

Aus der europäischen Patentanmeldung EP-A2-0 111 972 ist zur Vermeidung großer Suchlaufzeiten bei beliebiger Anordnung von Organisationskanälen im Frequenzband der Übertragungskanäle ein Verfahren zum Auswählen eines Organisationskanals durch eine bewegliche Funkstation bekannt. Gemäß dem bekannten Verfahren werden von der ortsfesten Funkstation zu veränderbaren Zeitabständen Verweise auf Organisationskanäle benachbarter ortsfester Funkstationen, Verweise auf einen der ortsfesten Funkstation zugeordneten Ersatzkanal und Verweise des Organisationskanals auf sich selbst gesendet. Sind der ortsfesten Funkstation mehrere Organisationskanäle zugeordnet, so werden von der ortsfesten Funkstation ebenfalls Verweise darauf gesendet, wobei alle gesendeten Verweise neben der Kanalnummer auch zusätzliche Informationen, wie beispielsweise eine Landeskennzahl und/oder eine Teilmengenmarkierung und/oder eine Rufzonenmarkierung beinhalten können.

Zur Durchführung dieses Verfahrens in einer ortsfesten Funkstation (BS) enthält die ortsfeste Funkstation eine Auswahlschaltung welche mit einer Schalteinrichtung verbunden ist. Weiterhin enthält die ortsfeste Funkstation eine Anzahl von Speichern in welchen Verweise auf Organisationskanäle die der ortsfesten zugeordnet sind, sowie Verweise auf mindestens einen der ortsfesten Funkstation ebenfalls zugeordneten Ersatzkanal, als auch Verweise auf diesen Organisationskanälen zugeordneten Kanalnummern abgespeichert sind. Die Schalteinrichtung wird durch die Auswahlschaltung gesteuert und gibt Nutzsignale oder Verweise ab, welche einem in der ortsfesten Funkstation angeordneten Sender zugeführt werden.

In der beweglichen Funkstation ist ein Empfänger angeordnet, welcher die durch den Sender ausgestrahlten Nutzsignale oder Verweise empfängt und einer Auswerteschaltung zuführt. Eine mit der Auswerteschaltung verbundene Auswahlschaltung steuert eine in der beweglichen Funkstation angeordnete Schalteinrichtung. Die Schalteinrichtung ist verbunden mit einer Speichergruppe in deren Speichern die Verweise auf die der ortsfesten Funkstation zugeordneten Organisationskanäle und die der ortsfesten Funkstation zugeordneten Ersatzkanäle gespeichert werden können.

Weiterhin ist aus der DE-OS 32 00 965 ein Nachbarfunkzellen-Organisationskanal-Verweissystem bekannt, bei dem, wenn die Organisationskanäle freie Übertragungskapazitäten aufweisen, Verweise auf Organisationskanäle von Nachbarfunkzellen gesendet werden. Inhalt der Verweise ist die benutzte Organisationskanal-Frequenz, wobei die Mobilfunkstation auf der angegebenen Organisations-Kanalfrequenz in zeitlichen Abständen Pegelvergleichsmessungen durchführt.

Zwischen den ortsfesten Funkstationen ist ein Austausch der Verweise für die Führung eines Netzabbildes notwendig. Sind der ortsfesten Funkstation beispielsweise fünf ortsfeste Funkstationen benachbart, so ist jede dieser benachbarten ortsfesten Funkstationen, bei Ausfall eines Organisationskanals und Umschaltung auf einen der ortsfesten Funkstation zugeordneten Ersatzkanal, zu informieren.

In einem dienstintegrierten Funkübertragungssystem müssen in der Regel nur wenige Dienste überall verfügbar sein. Hierbei wird die im dienstintegrierten Funkübertragungssystem zur Verfügung stehende Gesamtbandbreite bezüglich Zeit und Fläche (geographische Frequenzwiederholung) entsprechend dem jeweils aktuellen Bedarf aufgeteilt. Die ortsfesten Funkstationen sind nur mit solchen Einrichtungen für verschiedene Dienste versehen, für welche von den Teilnehmern der jeweiligen Funkzonen ein Bedarf besteht. Die Kosten für ein dienstintegriertes Funkübertragungssystem setzen sich im wesentlichen zusammen aus den Funktionen, die mindestens für den Zugang zum dienstintegrierten Funkübertragungssystem erforderlich sind und aus den für die Abwicklung der verschiedenen Dienste notwendigen Einrichtungen entsprechend den verschiedenen Teilnehmergeräten. Solche verschiedene Teilnehmergeräte können beispielsweise sein:
- ein einfacher Funkruf-Empfänger mit alphanumerischer Anzeige;
- ein "Westentaschen-Telefon" mit einer Empfangs- und einer Sendefrequenz zur Benutzung in einem eingeschränkten geographischen Bereich und mit verminderter Dienstgüte;
- ein "Dispatch-Gerät" (beim "Dispatch-Dienst" wird in der Richtung von der ortsfesten Funkstation zu den Fahrzeugen einer Fahrzeugflotte jeweils ein gemeinsamer Funkübertragungskanal benutzt, während in der Rückrichtung jedes Fahrzeug einen eigenen Funkübertragungskanal belegen kann) mit einer Empfangs- und wenigen Sendefrequenzen für Halbduplex-Betrieb;
- ein "Portable" mit mehreren Empfangs- und Sendefrequenzen für Duplexbetrieb und landesweiter Versorgung, welches auch im Fahrzeug benutzt werden kann;
- ein mobiles Datenterminal mit einer Halbduplex-Übertragung im Paketverfahren mit niedriger Datenrate;
- ein "mobiles Büro" (z.B. für Baustellen, Banken usw.) mit transparenter Duplex-Übertragung von 64 kbit/s, welches nur stationär betrieben wird usw..

Werden im Funkübertragungssystem unterschiedliche Arten von Teilnehmergeräten und verschiedene Dienste betrieben und sind für die verschiedenen Dienste auch verschiedene Organisationskanäle vorgesehen, so müssen die Verweise für alle verschiedenen Organisationskanäle zwischen den ortsfesten Funkstationen ausgetauscht werden. Sind beispielsweise im Funkübertragungssystem vier verschiedene Dienste vorgesehen - beispielsweise ein Sprachdienst, ein Datendienst mit niedriger Bitrate, ein Datendienst mit hoher Bitrate usw. - so sind bei dem vorher erwähnten Beispiel 20 Verweise zwischen den benachbarten ortsfesten Funkstationen notwendig.

Der Erfindung liegt die Aufgabe zugrunde, in einem dienstintegrierten Funkübertragungssystem ein Verfahren zum Auswählen eines Organisationskanals durch die beweglichen Funkstationen anzugeben, bei dem die Anzahl der zu überprüfenden Verweise gering ist.

Diese Aufgabe wird durch ein Verfahren mit den Merkmalen des Patentanspruchs 1 gelöst.

Beim erfindungsgemäßen Verfahren ist der Nachrichtenübertragungskanal zur Information über die Gestaltung von Organisationskanälen ein Simplex-Nachrichtenübertragungskanal, welcher vergleichbar zu einem Rundfunkkanal von der ortsfesten Funkstation gesendet wird. Der Nachrichtenübertragungskanal informiert die beweglichen Funkstationen über die Konfiguration (Anordnung) der Organisationskanäle im dienstintegrierten Funkübertragungssystem. In der Systemebene ist somit der Nachrichtenübertragungskanal über den Organisationskanälen angeordnet, wobei die bewegliche Funkstation für den Netzzugang lediglich die geringe Anzahl der verschiedenen im Gesamtfrequenzband des dienstintegrierten Funkübertragungssystems liegenden Nachrichtenübertragungskanäle absuchen muß.

Das erfindungsgemäße Verfahren kann auch bei einem digitalen Funkübertragungssystem zur Anwendung kommen, bei dem in Hin- und Rückrichtung der Funkübertragungskanäle jeweils ein anderes Modulationsverfahren angewandt wird. In der Richtung von der ortsfesten Funkstation zu den dieser zugeordneten beweglichen Funkstationen (Hin-Richtung) ist jeder Übertragungskanal durch Spreizmodulation gespreizt. Die so gebildeten gespreizten Funkübertragungskanäle werden in der ortsfesten Funkstation einander überlagert und das dadurch erhaltene breitbandige Summensignal wird in einem gemeinsamen Frequenzband übertragen. In der Richtung von den beweglichen Funkstationen zu der ortsfesten Funkstation (Rück-Richtung) erfolgt die Nachrichtenübertragung in voneinander getrennten, schmalbandigen Funkübertragungskanälen.

Jede ortsfeste Funkstation weist einen Kanalsatz beispielsweise aus 32 Übertragungskanälen auf. Die einzelnen Übertragungskanäle eines Kanalsatzes können beispielsweise durch verschiedeneSpreizcodewörter (CDMA) und/oder verschiedene Zeitkanäle (TDMA) voneinander getrennt werden. Beispielsweise werden die verschiedenen Zeitkanäle in einem Zeitmultiplexrahmen mit jeweils vier Zeitkanälen zusammengefaßt, anschließend wird jeder so gebildete Zeitmultiplexrahmen mit geeignet gewählten Codewörtern gespreizt, welche es erlauben, mehrere Zeitmultiplexrahmen gleichzeitig und mit derselben Tragerfrequenz zu übertragen. Werden beispielsweise pro Kanalsatz acht verschiedene Codewörter verwendet, so enthält der Kanalsatz acht verschiedene Zeitmultiplexrahmen mit jeweils vier Zeitkanälen, zusammen also 32 Übertragungskanäle pro Kanalsatz.

In einem solchen digitalen Funkübertragungssystem mit beispielsweise 20 verschiedenen Trägerfrequenzen ist in der beweglichen Funkstation nach dem Einschalten lediglich eine Suche nach jener Trägerfrequenz mit der höchsten Amplitude erforderlich, wodurch die Funkzelle bestimmt ist und der empfangene Nachrichtenstrom ist nach den Verweisen abzusuchen. Dadurch wird auf einfache Art und Weise den beweglichen Funkstationen der Netzzugang ermöglicht und es ist nur eine geringe Anzahl von Verweisen zu überprüfen.

Bevorzugte Ausgestaltungen der Erfindung sind in den weiteren abhängigen Ansprüchen gekennzeichnet.

Die Steuereinrichtung zur Durchführung des Verfahrens sowohl in der ortsfesten Funkstation wie auch in den beweglichen Funkstationen erfordert nur einen geringen zusätzlichen Schaltungsaufwand, da bereits jeweils vorhandene Einrichtungen mit benutzt werden können.

Die Erfindung wird im folgenden anhand einer in der Zeichnung dargestellten Ausführungsform näher beschrieben und erläutert. Es zeigt:
- Fig. 1: das Blockschaltbild der Steuereinrichtung in der ortsfesten Funkstelle und der beweglichen Funkstation und
- Fig. 2: die logische Struktur und Zuordnung der verschiedenen Verweise beim erfindungsgemäßen Verfahren.

Im Funkübertragungssystem sind ortsfeste Funkstationen BS räumlich nach einem Zellensystem angeordnet. Jeder ortsfesten Funkstation BS sind eine Anzahl von Übertragungskanälen zugeordnet, wobei einer dieser Übertragungskanäle (Organisationskanal) für die Signalisierung zur Steuerung der Systemfunktionen verwendet wird. Dazu gehört z.B. die Übertragung von Wahlinformationen beim Aufbau von Gesprächen zu den verschiedenen Teilnehmergeräten bzw. beweglichen Funkstationen MS.

Im Funkübertragungssystem können unterschiedliche Arten von Teilnehmergeräten und verschiedene Dienste betrieben werden. Jeder ortsfesten Funkstation BS sind mindestens ein Organisationskanal CCH, sowie ein Nachrichtenübertragungskanal COCH zugeordnet, welcher ein Simplex-Nachrichtenübertragungskanal ist, der vergleichbar zu einem Rundfunkkanal betrieben wird. Auf dem Nachrichtenübertragungskanal COCH werden Verweise NC auf Nachrichtenübertragungskanäle COCH benachbarter ortsfester Funkstationen BS gesendet. Weiterhin werden auf dem Nachrichtenübertragungskanal COCH mindestens ein Verweis CC auf einen der ortsfesten Funkstation BS zugeordneten Organisationskanal CCH gesendet. Inhalt der Verweise NC bzw. CC sind mindestens die den Nachrichtenübertragungskanälen COCH bzw. den Organisationskanälen CCH zugeordneten Adressen (d.h. Frequenz, Zeit, Code). Weiterhin sendet die ortsfeste Funkstation BS zu veränderbaren Zeitabständen auf dem Nachrichtenübertragungskanal COCH Verweise MR auf diesen selbst, wobei der Verweis MR den Nachrichtenübertragungskanal COCH als solchen kennzeichnet. Schließlich sendet die ortsfeste Funkstation BS zu veränderbaren Zeitabständen auf dem Nachrichtenübertragungskanal COCH einen Verweis SC auf einen ihr zugeordneten Ersatzkanal COCH-SC, wobei Inhalt des Verweises SC ebenfalls die Adresse des Ersatzkanals COCH-SC ist. In den Verweisen NC, SC, MR und CC kann eine codierte Nachricht für eine Landeskennzahl und/oder eine Teilmengenmarkierung und/oder eine Rufzonenmarkierung und/oder Dienstmarkierung und/oder Gebühreninformation und/oder Systembetreiber-Kennzeichnung gesendet werden.

In einem Funkübertragungssystem mit veränderbarer Zuordnung der Kanäle in Hin- und Rück-Richtung durch die ortsfeste Funkstation BS betrifft der im Nachrichtenübertragungskanal COCH übertragene Verweis CC nur die Hinrichtung (downlink) des Organisationskanals CCH und in dem so bestimmten Organisationskanal CCH wird eine Referenz auf einen Organisationskanal CCH in Rückrichtung (uplink d.h. in Richtung von der beweglichen Funkstation MS zur ortsfesten Funkstation BS) gesendet.

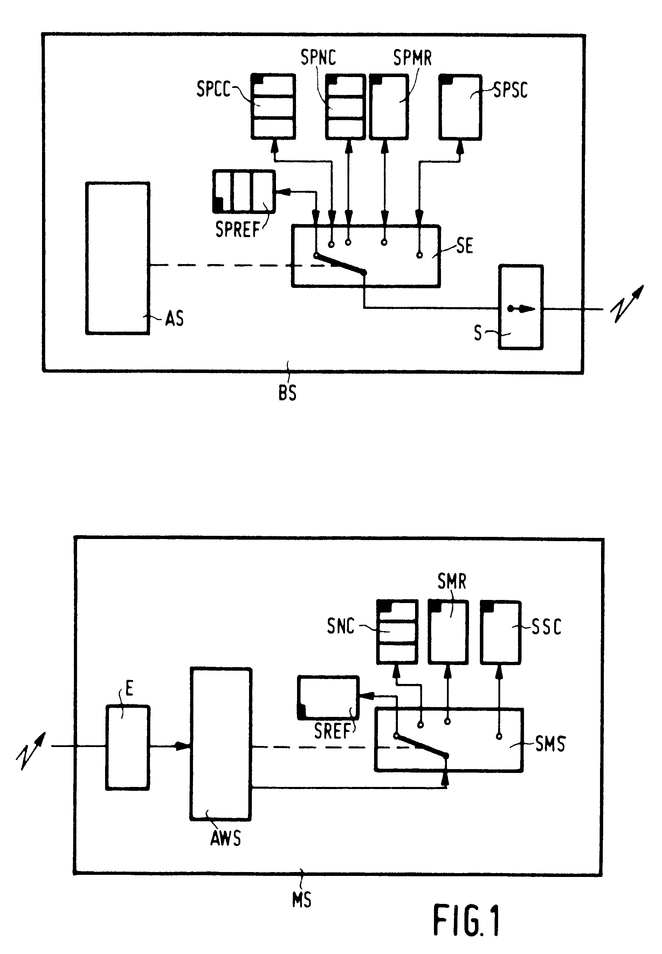

In Fig. 1 ist das Blockschaltbild der Steuereinrichtung in ortsfester Funkstation BS und beweglicher Funkstation MS dargestellt. Die ortsfeste Funkstation BS weist eine Auswahlschaltung AS auf, welche mit einer Schalteinrichtung SE verbunden ist und welche den Umschaltevorgang der Schalteinrichtung SE steuert. Für die Auswahlschaltung AS kann eine in der ortsfesten Funkstation BS angeordnete Steuereinrichtung (Mikroprozessor) mit benutzt werden. Mit der Schalteinrichtung SE sind verschiedene Speicher verbunden und gesteuert durch die Auswahlschaltung AS wird jeweils der Speicherinhalt der verschiedenen Speicher ausgelesen und über die Schalteinrichtung SE einem in der ortsfesten Funkstation BS angeordneten Sender S zugeführt. In einem Speicher SPMR ist der Verweis MR des NachrichtenübertragungskanalS COCH auf sich selbst gespeichert. Der Verweis SC auf einen dem Nachrichtenübertragungskanal COCH zugeordneten Ersatzkanal COCH-SC wird in einem Speicher SPSC gespeichert. In einem Speicher SPNC werden die Verweise NC auf Nachrichtenübertragungskanäle COCH benachbarter ortsfester Funkstationen BS gespeichert und die Verweise CC auf die der ortsfesten Funkstation BS zugeordneten Organisationskanälen CCH werden in einem Speicher SPCC abgespeichert. In einem Speicher SPREF werden Verweise REF auf Organisationskanäle CCH der Rückrichtung (uplink) gespeichert Diese Verweise REF werden in den zugehörigen Organisationskanälen CCH der Hinrichtung (downlink) gesendet.

Zu veränderbaren Zeitabständen werden die Verweise CC, NC, SC und MR von der ortsfesten Funkstation BS gesendet und in einem in der beweglichen Funkstation MS angeordneten Empfänger E empfangen. Nach Decodierung und Demodulation werden die Verweise CC, NC, MR und SC einer mit dem Empfänger E verbundenen Auswahlschaltung AWS zugeführt, welche ihrerseits mit einer Schalteinrichtung SMS verbunden ist und diese steuert. Mit der Schalteinrichtung SMS sind ein Speicher SNC zur Speicherung der Verweise NC auf Nachrichtenübertragungskanäle COCH benachbarter ortsfester Funkstationen BS, ein Speicher SMR zur Speicherung des Verweises MR des Nachrichtenübertragungskanals COCH auf sich selbst und ein Speicher SSC zur Speicherung des Verweises SC auf einen dem Nachrichtenübertragungskanal COCH zugeordneten Ersatzkanal COCH-SC verbunden. In einem Speicher SREF wird der im Organisationskanal CCH der Hinrichtung übertragene Verweis REF auf den zugehörigen Organisationskanal CCH der Rückrichtung gespeichert.

Beim Einschalten der beweglichen Funkstation MS oder bei Nichtübereinstimmung des Inhalts des Verweises MR des Nachrichtenübertragungskanals COCH auf sich selbst, beginnt die bewegliche Funkstation MS einen Suchlauf nach Verweisen MR, wählt aus den im Nachrichtenübertragungskanal COCH übertragenen Verweisen CC einen geeigneten Organisationskanal CCH aus und schaltet auf diesen um. Das so gewonnene aktuelle Netzabbild wird jeweils in den Speichern SNC, SMR und SSC abgespeichert.

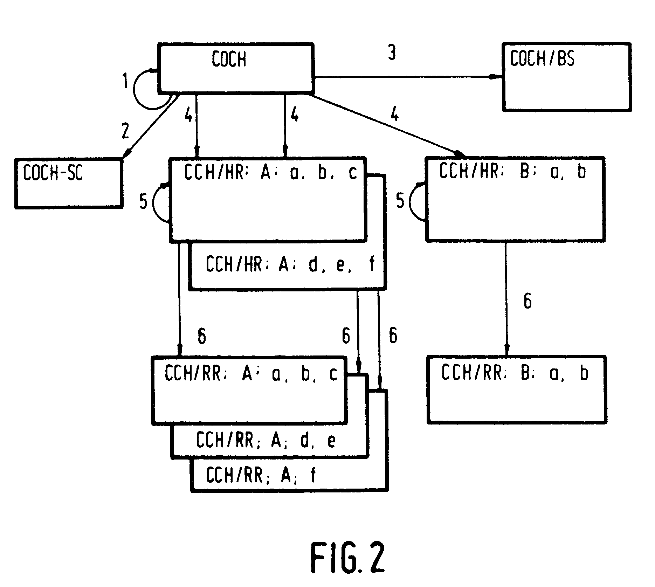

In Fig. 2 ist die logische Struktur der Verweise und deren Zuordnung zueinander dargestellt. Die verschiedenen Blöcke dieser Struktur haben dabei die im folgenden angegebene Bedeutung:

| Kurzbezeichnung | Bedeutung |
|---|---|
| COCH/BS | COCH einer benachbarten BS |
| CCH/HR; A; a, b, c | CCH Hinrichtung; Dienst A; Teilmenge a, b, c |
| CCH/HR; B; a, b | CCH Hinrichtung; Dienst B; Teilmenge a, b |
| CCH/HR, A; d, e, f | CCH Hinrichtung; Dienst A; Teilmenge d, e, f |
| CCH/RR; A; a, b, c | CCH Rückrichtung; Dienst A; Teilmenge a, b, c |
| CCH/RR; A; d, e | CCH Rückrichtung; Dienst A; Teilmenge d, e |
| CCH/RR; A; f | CCH Rückrichtung; Dienst A; Teilmenge f |
| CCH/RR; B; a, b | CCH Rückrichtung; Dienst B; Teilmenge a, b |

In einem dienstintegrierten Funkübertragungssystem sind für die verschiedenen Dienste verschiedene Organisationskanäle (in Fig. 2 durch A und B angedeutet) vorgesehen und die Gesamtmenge der im Funkversorgungsgebiet der ortsfesten Funkstation BS befindlichen beweglichen Funkstationen MS kann in Teilmengen a bis f unterteilt sein. Erst auf dieser in der Systemhierarchie niedrigeren Ebene der Organisationskanäle CCH werden also Verweise (CCH-marker, REF) auf die der ortsfesten Funkstation BS zugeordneten Organisationskanäle CCH gesendet, während die Verweise NC auf die der ortsfesten Funkstation BS benachbarten, ortsfesten Funkstationen BS in einer höheren Systemebene abgewickelt werden.

In der nachstehenden Tabelle ist verdeutlicht, daß - bei einer durch die ortsfeste Funkstation BS veränderbaren Zuordnung von Kanälen in Hin- und Rückrichtung - in Hinrichtung die Referenz CC auf dem Nachrichtenübertragungskanal COCH übertragen wird, während die Referenz REF für den diesem Organisationskanal CCH zugeordneten Kanal in Rückrichtung auf dem betreffenden Organisationskanal CCH übertragen wird.

| | Verweis | wird übertragen im | verweist auf |
|---|---|---|---|
| 1 | MR | COCH | COCH |
| 2 | SC | COCH | COCH-SC |
| 3 | NC | COCH | Nachbar COCH |
| 4 | CC | COCH | CCH Hinrichtung |
| 5 | CCH-marker | CCH | CCH Hinrichtung |
| 6 | REF | CCH | CCH Rückrichtung |

Auf dem Organisationskanal CCH kann auch noch eine Referenz (CCH-marker) auf den Organisationskanal CCH selbst übertragen werden. Diese Referenz dient zur Überprüfung des Umschaltevorgangs durch die bewegliche Funkstation MS vom Nachrichtenübertragungskanal COCH auf den Organisationskanal CCH. Diese Referenz erhöht die Sicherheit des Umschaltevorganges und ist für den Systembetrieb nicht unbedingt erforderlich.

## Patentansprüche

1. Verfahren zum Auswählen eines Organisationskanals (CCH) durch eine bewegliche Funkstation (MS) eines Funkübertragungssystems mit ortsfesten Funkstationen (BS), welchen mindestens ein Organisationskanal (CCH) zugeordnet ist, wobei die ortsfeste Funkstation (BS) zu veränderbaren Zeitabständen Verweise auf andere bestehende Organisationskanäle (CCH) sendet,
dadurch gekennzeichnet,
daß jede ortsfeste Funkstation (BS) auf einem Nachrichtenübertragungskanal (COCH), welcher ein Simplex-Nachrichtenübertragungskanal ist, zur Information über die Gestaltung von Organisationskanälen (CCH) Verweise (NC) auf Nachrichtenübertragungskanäle (COCH) benachbarter ortsfester Funkstationen (BS) sendet und daß auf dem Nachrichtenübertragungskanal (COCH) mindestens ein Verweis (CC) auf einen der ortsfesten Funkstation (BS) zugeordneten Organisationskanal (CCH) gesendet wird, wobei Inhalt eines Verweises (NC, CC) mindestens die dem Nachrichtenübertragungskanal (COCH) bzw. Organisationskanal (CCH) zugeordneten Adressen sind.

2. Verfahren nach Anspruch 1,
dadurch gekennzeichnet,
daß die ortsfeste Funkstation (BS) zu veränderbaren Zeitabständen auf dem Nachrichtenübertragungskanal (COCH) Verweise (MR) auf diesen selbst sendet, wobei der Verweis (MR) den Nachrichtenübertragungskanal (COCH) kennzeichnet.

3. Verfahren nach Anspruch 1,
dadurch gekennzeichnet,
daß die ortsfeste Funkstation (BS) zu veränderbaren Zeitabständen auf dem Nachrichtenübertragungskanal (COCH) einen Verweis (SC) auf einen diesem zugeordneten Ersatzkanal (COCH-SC) sendet, wobei Inhalt des Verweises (SC) die Adresse ist.

4. Verfahren nach einem der Ansprüche 1 bis 3,
dadurch gekennzeichnet, daß
die ortsfeste Funkstation (BS) in den Verweisen (NC, SC, MR, CC) neben der Adresse eine codierte Nachricht über Landeskennzahl und/oder eine Teilmengenmarkierung und/oder eine Rufzonenmarkierung und/oder eine Dienstemarkierung und/oder eine Gebühreninformation und/oder eine Systembetreiber-Kennzeichnung sendet.

5. Verfahren nach Anspruch 1,
dadurch gekennzeichnet,
daß beim Einschalten der beweglichen Funkstation (MS) oder bei Nichtübereinstimmung des Inhalts des Verweises (MR) des Nachrichtenübertragungskanals (COCH) auf sich selber, die bewegliche Funkstation (MS) einen Suchlauf nach den Verweisen (MR) beginnt, aus den im Nachrichtenübertragungskanal (COCH) übertragenen Verweisen (CC) einen geeigneten Organisationskanal (CCH) auswählt und auf diesen umschaltet.

6. Verfahren nach Anspruch 5,
dadurch gekennzeichnet,
daß die bewegliche Funkstation (MS) die Verweise (NC) auf Nachrichtenübertragungskanäle (COCH) benachbarter ortsfester Funkstationen (BS), die Verweise (MR) der Nachrichtenübertragungskanäle (COCH) auf sich selbst und die Verweise (SC) auf die den Nachrichtenübertragungskanälen (COCH) zugeordneten Ersatzkanälen (COCH-SC) speichert.

7. Verfahren nach Anspruch 1,
dadurch gekennzeichnet,
daß die Trennung der Kanäle unter Anwendung des Frequenzmultiplex- und/oder Zeitmultiplex- und/oder Codemultiplexverfahren erfolgt, wobei für ortsfeste Funkstationen (BS) mit geringem Verkehrsaufkommen der Nachrichtenübertragungskanal (COCH) und der Organisationskanal (CCH) abwechselnd im gleichen Kanal übertragen werden.

8. Verfahren nach Anspruch 1 unter Anwendung bei einem Funkübertragungssystem mit durch die ortsfeste Funkstation (BS) veränderbarer Zuordnung der Kanäle in Hinund Rückrichtung,
dadurch gekennzeichnet,
daß der Verweis (CC) auf die der ortsfesten Funkstation (BS) zugeordneten Organisationskanäle (CCH) im Nachrichtenübertragungskanal (COCH) nur für die Hinrichtung des Organisationskanals (CCH) übertragen wird und daß in diesem Organisationskanal (CCH) eine Referenz (REF) für die Rückrichtung des Organisationskanals (CCH) gesendet wird.

9. Ortsfeste Funkstation (BS) mit einer Auswahlanordnung (AS), einer Schalteinrichtung (SE) und einer Anzahl von Speichern welche zur Aufnahme von Verweisen (MR) auf mindestens einen der ortsfesten Funkstation (BS) zugeordneten Organisationskanal (CCH) sowie von Verweisen (SC) auf einen der ortsfesten Funkstation zugeordneten Ersatzkanal (CCH-SC) vorgesehen sind, wobei die Speicher mit der Schalteinrichtung (SE) derart verbunden sind, daß die Schalteinrichtung (SE) gesteuert von der Auswahlschaltung (AS) die Verweise (MR, SC) einem in der ortsvernetzten Funkstation (BS) angeordneten Sender (S) zuführt,
dadurch gekennzeichnet,
daß in der ortsfesten Funkstation (BS) ein weiterer Speicher (SPNC) für Verweise (NC) auf Nachrichtenübertragungskanäle (COCH) benachbarter ortsfester Funkstationen (BS) sowie ein weiterer Speicher (SPMR) für Verweise (MR) des Nachrichtenübertragungskanals (COCH) auf sich selbst vorgesehen ist.

10. Bewegliche Funkstation (MS) mit einem Empfänger (E) und einer Auswahlschaltung (AWS) die zum Empfang und zur Auswertung von Verweisen (MR, SC) auf einen Organisationskanal (CCH) sowie auf einen Ersatzkanal (CCH-SC) einer ortsfesten Funkstation (BS) vorgesehen sind, wobei die Verweise (MR, SC) durch eine in der beweglichen Funkstation (MS) angeordnete Schalteinrichtung (SMS) in Speichergruppen abspeicherbar sind,
dadurch gekennzeichnet,
daß der Empfänger (E) und die Auswahlschaltung (AWS) sowie die Speichergruppe zur Speicherung von Verweisen (NC) auf Nachrichtenübertragungskanäle (COCH) benachbarter ortsfester Funkstationen (BS) vorgesehen sind.

## Claims

1. A method of selecting a control channel (CCH) by a mobile radio station (MS) of a radio transmission system incorporating base radio stations (BS), whereto at least one control channel (CCH) is assigned, the base radio station (BS) transmitting references to other existing control channels (CCH) at variable time intervals, characterized in that each base radio station (BS) transmits references((NC), via a message transmission channel (COCH) which is a simplex message transmission channel to message transmission channels (COCH) of neighbouring base radio stations (BS) to give details of the structure of control channels (COCH), and that at least one reference (CC) to a control channel assigned to the base station (BS), to the message transmission channel (COCH), the content of a reference (NC, CC) being at least the addresses assigned to the message transmission channel (COCH) or to the control channel (CCH), respectively.

2. A method as claimed in Claim 1, characterized in that at variable time intervals the base radio station (BS) transmits, via the message transmission channel (COCH), references (MR) to this message transmission channel itself, the reference (MR) characterizing the message transmission channel (COCH).

3. A method as claimed in Claim 1 , characterized in that at variable time intervals the base radio station (BS) transmits via the message transmission channel (COCH), a reference (SC) to a substitute channel (COCH-SC) assigned thereto, the content of the reference (SC) being the address.

4. A method as claimed in any one of the Claims 1 to 3, characterized in that the base station (BS) transmits in the references (NC, SC, MR, CC), in addition to the address, an encoded message about country code and/or a group marking and/or a call zone marking and/or a service marking and/or call charge accounting information and/or a system user code.

5. A method as claimed in Claim 1, characterized in that, when the mobile radio station (MS) is switched on or in the case of non-correspondence of the content of the reference (MR) of the message transmission channel (COCH) to this channel itself, the mobile radio station (MS) starts a search procedure for the references (MR), selects an appropriate control channel (CCH) from the references (CC) transmitted via the message transmission channel (COCH), and switches over to said appropriate channel.

6. A method as claimed in Claim 5, characterized in that the mobile radio station (MS) stores the references (NC) to message transmission channels (COCH) of neighbouring base radio stations (BS), the references (MR) of the message transmission channels (COCH) to themselves, and the references (SC) to the substitute channels (COCH-SC) assigned to the message transmission channels (COCH).

7. A method as claimed in Claim 1 , characterized in that separating the channels is effected using the frequency-division multiplex and/or time-division multiplex and/or code-division multiplex method, the message transmission channel (COCH) and the control channel (CCH) being alternately transmitted via the same channel for base radio stations (BS) having a low traffic load.

8. A method as claimed in Claim 1, used in a radio transmission system with a channel assignment which can be changed, by the base radio station (BS), in the forward and return directions, characterized in that the reference (CC) to the control channels (CCH) assigned to the base station (BS) is transmitted via the message transmission channel (COCH) only for the forward direction of the control channel (CCH), and that via this control channel (CCH) a reference (REF) for the return direction of the control channel (CCH) is transmitted.

9. A base radio station (BS), comprising a selection arrangement (AS), a switching device (SE), and a number of memories for storing references (MR) to at least one control channel (CCH) assigned to the base radio station (BS), as well as references (SC) to a substitute channel (CCH-SC) assigned to the base radio station, the memories being connected to the switching device (SE) so that, under the control of the selection circuit (AS), the switching device (SE) applies the references (MR, SC) to a transmitter (S) included in the base radio station (BS), characterized in that in the base station (BS) there is provided a further memory (SPNC) for references (NC) to message transmission channels (COCH) of neighbouring base radio stations (BS) as well as a further memory (SPMR) for references (MR) of the message transmission channel (COCH) to itself.

10. A mobile radio station (MS), comprising a receiver (E) and a selection circuit (AWS) which are provided to receive and evaluate references (MR, SC) to a control channel (CCH) as well as to a substitute channel (CCH-SC) of a base radio station (BS), it being possible to store the references (MR, SC) in memory groups by means of a switching device (SMS) included in the mobile radio station (MS), characterized in that the receiver (E) and the selection circuit (AWS) as well as the memory group are provided for the storage of references (NC) to message transmission channels (COCH) of neighbouring base radio stations(BE).

## Revendications

1. Procédé pour la sélection d'un canal de service (CCH) par un poste de radio mobile (MS) d'un système de transmission radio comportant des postes de radio fixes (BS) auxquels est associé au moins un canal de service (CCH), le poste de radio fixe (BS) émettant à des intervalles de temps variables, des renvois à d'autres canaux de service (CCH) existants, caractérisé en ce que chaque poste de radio fixe (BS) émet, sur un canal de transmission de messages (COCH), qui est un canal de transmission de messages simplex, pour l'information concernant la configuration des canaux de service (CCH), des renvois à des canaux de transmission de messages (COCH) de postes de radio fixes voisins et que, sur le canal de transmission de messages (COCH), est émis au moins un renvoi (CC) à un canal de service (CCH) associé au poste de radio fixe (BS), le contenu d'un renvoi (NC, CC) étant constitué au moins des adresses associées au canal de transmission de messages (COCH) ou au canal de service (CCH).

2. Procédé suivant la revendication 1, caractérisé en ce que le poste de radio fixe (BS) émet, à des intervalles de temps variables, sur le canal de transmission de messages (COCH), des renvois (MR) à celui-ci, le renvoi (MR) caractérisant le canal de transmission de messages (COCH).

3. Procédé suivant la revendication 1, caractérisé en ce que le poste de radio fixe (BS) émet, à des intervalles de temps variables, sur le canal de transmission de messages (COCH), un renvoi (SC) à un canal de remplacement (COCH-SC) associé à celui-ci, le contenu du renvoi (SC) étant l'adresse.

4. Procédé suivant l'une quelconque des revendications 1 à 3, caractérisé en ce que le poste de radio fixe (BS) émet, dans les renvois (NC, SC, MR, CC), outre l'adresse, un message codé concernant le numéro d'identification de pays et/ou un marquage de quantité partielle et/ou un marquaqe de zone d'appel et/ou un marquage de service et/ou une information de taxation et/ou une caractérisation de l'utilisateur du système.

5. Procédé suivant la revendication 1, caractérisé en ce que, lors de l'enclenchement du poste de radio mobile (MS) ou en cas de non-concordance du contenu du renvoi (MR) du canal de transmission de messages (COCH) à lui-même, le poste de radio mobile (MS) entame une recherche des renvois (MR), sélectionne un canal de service (CCH) approprié parmi les renvois (CC) transmis dans le canal de transmission de messages (COCH) et commute sur celui-ci.

6. Procédé suivant la revendication 5, caractérisé en ce que le poste de radio mobile (MS) stocke les renvois (NC) aux canaux de transmission de messages (COCH) de postes de radio fixes (BS) voisins, les renvois (MR) des canaux de transmission de messages (COCH) à eux-mêmes et les renvois (SC) aux canaux de remplacement (COCH-SC) associés aux canaux de transmission de messages (COCH).

7. Procédé suivant la revendication 1, caractérisé en ce que la séparation des canaux est réalisée par application du procédé de multiplexage en fréquence et/ou de multiplexage temporel et/ou de multiplexage codé, auquel cas, pour les postes de radio fixes (BS) à faible trafic, le canal de transmission de messages (COCH) et le canal de service (CCH) sont transmis en alternance dans le même canal.

8. Procédé suivant la revendication 1, utilisé pour un système de transmission radio avec affectation variable des canaux dans le sens aller et dans le sens retour par le poste de radio fixe (BS), caractérisé en ce que le renvoi (CC) aux canaux de service (CCH) associés au poste de radio fixe (BS) dans le canal de transmission de messages (COCH) n'est transmis que pour le sens aller du canal de service (CCH) et que, dans ce canal de service (CCH), est émise une référence (REF) pour le sens retour du canal de service (CCH).

9. Poste de radio fixe (BS) comportant un dispositif de sélection (AS), un dispositif de commutation (SE) et un certain nombre de mémoires qui sont prévues pour recevoir des renvois (MR) à au moins un canal de service (CCH) associé au poste de radio fixe (BS), ainsi que des renvois (SC) à un canal de remplacement (CCH-SC) associé au poste de radio fixe, les mémoires étant connectées au dispositif de commutation (SE) d'une manière telle que ce dispositif de commutation (SE) applique, sous la commande du circuit de sélection (AS), les renvois (MR, SC) à un émetteur (S) installé dans le poste de radio fixe (BS), caractérisé en ce que, dans le poste de radio fixe (BS) sont prévues une autre mémoire (SPNC) pour des renvois (NC) aux canaux de transmission de messages (COCH) de postes de radio fixes voisins (BS) ainsi qu'une autre mémoire (SPMR) pour des renvois (MR) du canal de transmission de messages (COCH) à lui-même.

10. Poste de radio mobile (MS) comportant un récepteur (E) et un circuit de sélection (AWS) qui sont prévus pour la réception et l'évaluation de renvois (MR, SC) à un canal de service (CCH) ainsi qu'à un canal de remplacement (CCH-SC) d'un poste de radio fixe (BS), les renvois (MR, SC) pouvant être stockés dans des groupes de mémoires par un dispositif de commutation (SMS) prévu dans le poste de radio mobile (MS), caractérisé en ce que le récepteur (E) et le circuit de sélection (AWS) ainsi que le groupe de mémoires sont prévus pour le stockage de renvois (NC) à des canaux de transmission de messages (COCH) de postes de radio fixes (BS) voisins.
